# EUROPÄISCHE PATENTANMELDUNG

(11) **EP 0 582 118 A1**
(43) Veröffentlichungstag der Anmeldung: **09.02.1994**
(21) Anmeldenummer: 93111519.0
(22) Anmeldetag: 19.07.1993
(51) Int. Cl.: F24J 3/08, E02D 27/12, E21B 23/00, E21B 36/00

(54) **Erdsondengebilde, Distanzhalter für Erdsondengebilde, mindestens einteiliger Erdpfahl mit Erdsonde, Erdwärmegewinnungsanlage sowie deren Verfahren**

(30) Priorität: 06.08.1992 CH 2464/92
(71) Anmelder: SACAC HERGISWIL AG, CH-6052 Hergiswil (CH)
(72) Erfinder: Felder, Hans-Peter, Bauingenieur HTL, CH-6210 Sursee (CH)
(74) Vertreter: Troesch Scheidegger Werner AG

(57) **Zusammenfassung**

Das Erdsondengebilde weist mindestens eine im wesentlichen aus Kunststoff bestehende formsteife Erdsonde (6) für den Einbau in Hohlräume (13) von Fundierungselementen (4) und Bohrlöchern auf. Diese Erdsonde hat einen Kopfteil (18), welcher mit zwei geraden, parallelen Langrohren (21) durch Schweissung oder Klebung flüssigkeitsdicht verbunden ist. Ein Bodenteil (19) ist mit einem der geraden Rohre (21) durch Schweissung oder Klebung flüssigkeitsdicht verbunden. Es können mehrere Erdsonden (6) parallelgeschaltet werden. Damit wird es möglich, Erdwärmegewinnungsanlagen mit Fundierungselementen zu schaffen, welche gestatten, mehrteilige Pfähle miteinander zu verbinden, ohne dabei die Gefahr der Beschädigung oder den Verlust der Kontrollmöglichkeit der eingebrachten Zirkulationsleitungen oder Sonden zu riskieren.

## Beschreibung

Die vorliegende Erfindung betrifft ein Erdsondengebilde mit mindestens einer im wesentlichen aus Kunststoff bestehenden formsteifen Erdsonde für den Einbau in Hohlräume von Fundierungselementen und Bohrlöchern, einen Distanzhalter für Erdsondengebilde mit mehreren parallel geschalteten Langrohren, einen mindestens einteiligen Erdpfahl mit Erdsonde, eine Erdwärmegewinnungsanlage mit hohlen Betonpfählen und in deren Hohlräumen angedordnete Erdsondengebilde und Flüssigkeitsverteil- und Sammelleitungen, sowie ein Verfahren zum Herstellen einer Erdwärmegewinnungsanlage mit mindestens einem hohlen Betonpfahl zum Stützen einer Baute.

Es ist bekannt, Wärmetauscherkörper in das Erdreich einzubringen, wobei diese insbesondere als Bauteil aus Beton in Form eines Betonpfahles vorgesehen sind. In diesem Bauteil ist wenigstens eine Rohrleitung angeordnet, die vom Kopf bis vorzugsweise in den Bereich der Spitze reicht und wieder zum Kopf zurückgeführt ist. Die aus dem Kopf des Pfahles herausragenden Rohrleitungsenden dienen jeweils als Anschlüsse für Vor- und Rücklauf eines Wärmeträgermittels. Dabei ist die vorgesehene Rohrleitung im Pfahlkörper im wesentlichen vertikal orientiert. Es ist möglich, die Rohrleitung am Bewehrungskorb des Pfahles zu befestigen, was insbesondere dann vorgenommen wird, wenn die Pfähle als Wärmetauscher fabrikmässig vorgefertigt werden. Die Führung der Rohrleitung im untenliegenden Wärmeaufnahmebereich des Pfahles kann dabei grundsätzlich beliebig sein. Es ist vorgesehen, in ein und demselben Pfahl mehrere Rohrleitungsstränge parallellaufend im Pfahlkörper anzuordnen. Die im Pfahlkörper angeordneten Rohrleitungsstränge können dabei aus Kunststoff bestehen, wobei der im Pfahl versenkte Anteil der Rohre einteilig und gegebenenfalls teilweise als Wendel ausgebildet sein kann. (DE-A 30 26 638)
Eine ähnliche Konstruktion, wie die vorbeschriebene, ist in der DE-A 37 19 523 erläutert, wobei der Unterschied gegenüber der DE-A 30 26 638 darin besteht, dass die im Pfahl angeordnete Umlaufleitung als biegbarer Schlauch ausgebildet ist.

Auch die dänische Patentschrift 140 233 zeigt ein Fundierungs- und Absicherungselement aus Beton, welches im Erdreich eingelassen ist und in seinem Inneren eine U-förmig gebogene Umlaufleitung zwecks Erdwärmeausnützung verwendet.

Auch das im Erdreich versenkte Verdampferaggregat einer bekannten Wärmepumpenanlage für eine kombinierte Luftheizung und Warmwasserbereitung für eine Wärmeentnahme aus dem Erdreich weist in seinem Inneren ein mit einem Wärmeträger beeinflusstes Sondenrohr auf, das an seinem unteren Ende U-förmig umgebogen ist. (DE- A 1 601 325)
Fundierungselemente mit integrierten bzw. einbetonierten Zirkulationsleitungen weisen einen grossen Nachteil auf: Wenn infolge der Erdreichbeschaffenheit sehr lange Pfähle benötigt werden, müssen diese wegen des Transportes, der Grösse der Rammaschinen usw. mehrteilig und damit kuppelbar sein. Dies ist natürlich auch für die entsprechenden Zirkulationsleitungen ein unbedingtes Erfordernis. Da insbesondere das Kuppeln der Zirkulationsleitungen bei mehrteiligen Fundamentpfählen mit grossen Risiken der Beschädigung verbunden ist, beschränkt sich die Sondenlänge und damit der ausnützbare Wärmebereich nur auf das oberste Element des mehrteiligen Fundamentpfahles.

Die vorliegende Erfindung bezweckt die Schaffung von Erdwärmegewinnungsanlagen mit Fundierungselementen, welche ermöglichen, mehrteilige Pfähle miteinander zu verbinden, ohne dabei die Gefahr der Beschädigung oder den Verlust der Kontrollmöglichkeit der eingebrachten Zirkulationsleitungen oder Sonden zu riskieren.

Dieses Problem wird mittels einer Erdwärmegewinnungsanlage gemäss einem der Ansprüche erreicht.

Die Erfindung wird anschliessend beispielsweise anhand von Figuren erläutert.

Es zeigen:
- Fig. 1: eine schematische, perspektivische Darstellung eines auf Pfählen abgestützten Gebäudes mit einer Erdwärmegewinnungsanlage gemäss der vorliegenden Erfindung,
- Fig. 2: einen Betonhohlpfahl mit nach der Pfählung teilweise eingeschobener Sonde, teilweise im Schnitt,
- Fig. 3: einen Distanzhalter in Aufsicht,
- Fig. 4, 5: zwei zum Einbringen in einen Rammpfahl bereite, parallel geschaltete Sonden im Auf- und Seitenriss,
- Fig. 6, 7: einen unteren und einen oberen Verbindungsteil für Sonden, in Seitenansicht,
- Fig. 8: eine schematische Ansicht zweier gerammter Erdpfähle,
- Fig. 9 bis 24: Sonden und deren Aufbauteile in Schnitten, Aufrissen und Grundrissen,
- Fig. 25: einen Sondenmontagewagen in perspektivischer Seitenansicht,
- Fig. 26: eine Seitenansicht eines offenen Verteilerkastens,
- Fig. 27: eine Vorderansicht des Verteilerkastens nach Fig. 26.

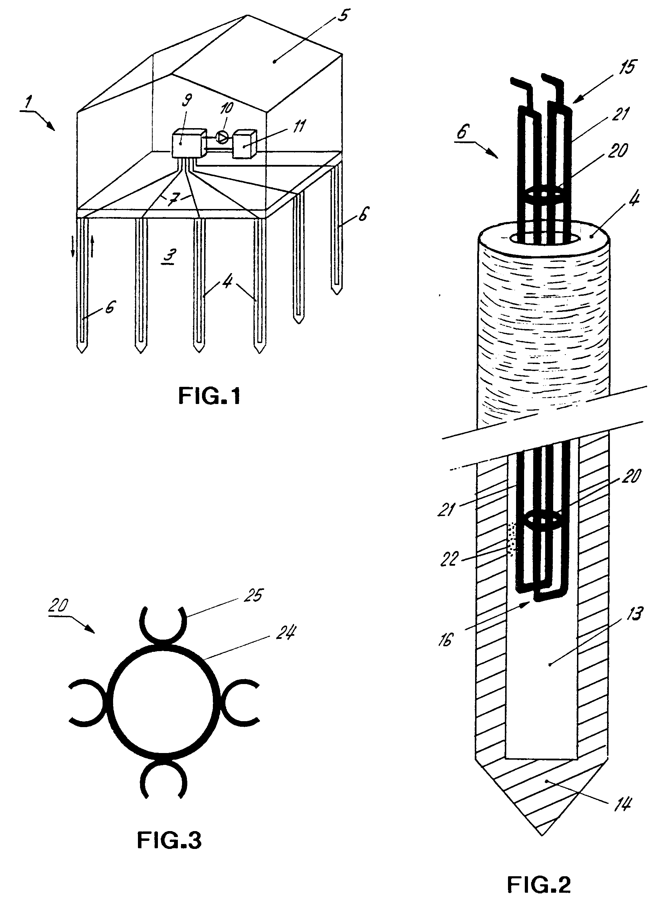

Die in Fig. 1 dargestellte Erdwärmegewinnungsanlage 1 ruht mit ihrem Gebäude 5 auf Schleuderbetonpfählen 4, welche in Erdreich 3 eingerammt sind. Diese Pfähle 4 dienen insbesondere dem Gebäude 5 als Fundament. In den Schleuderbetonpfählen 4 sind Pfahlsonden 6 eingebracht, welche mit ihren Verteilleitungen 7 wärmetauschende Flüssigkeit führen.

Diese Flüssigkeitsverteilleitungen 7 führen zu und von den Pfahlsonden 6 zu einem Verteilerkasten 9, dem eine Umwälzpumpe 10 nachgeschaltet ist. Diese pumpt die Flüssigkeit aus den Verteilleitungen 7 in eine Wärmepumpe 11, in welcher bekannterweise der eingepumpten Flüssigkeit mittels Wärmeaustauschern Wärme entzogen und dabei eine Sekundärflüssigkeit auf eine höhere Temperatur gebracht wird.

Die dargestellte Erdwärmegewinnungsanlage 1 funktioniert grundsätzlich wie folgt:
Die hohlen Schleuderbetonpfähle 4 werden nach dem Rammen mit speziellen Pfahlsonden 6 ausgerüstet. Mit Hilfe dieser Pfahlsonden 6 wird dem Erdreich 3 Wärme entzogen. Das Entnehmen der Wärme erfolgt über eine Wärmeträgerflüssigkeit, welche durch die Pfahlsonden 6 gepumpt wird. Die Wärmepumpe 11 entnimmt der Wärmeträgerflüssigkeit Wärmeenergie und bringt sie auf ein höheres Temperaturniveau, so dass sie als Nutzwärme verwendbar wird. Die abgekühlte Wärmeträgerflüssigkeit fliesst im geschlossenen Kreislauf wieder in die Pfahlsonden 6 und nimmt dort erneut aus dem Erdbereich 3 Wärme auf.

Die Fig. 2 zeigt einen Schleuderbetonpfahl 4, der in seinem unteren Teil in axialen Schnitt dargestellt ist. Zwei als Einheit zusammengebaute Pfahlsonden 6 sind im Begriff in den zylindrischen Hohlraum 13 des Schleuderbetonpfahles 4 eingeführt zu werden. Nach deren vollständigem Einschieben verschwinden die oberen Sondenenden 15 in der Mündung des Pfahles 4, während die unteren Sondenenden 16 im Bereich der Pfahlspitze 14 zu liegen kommen. Die geraden Rohre 21 der beiden Pfahlsonden 6 sind über obere Verbindungsteile 18 und untere Verbindungsteile 19 parallel geschaltet. Um die langen geraden Rohre 21 der Pfahlsonden 6 parallel und gerade zu führen, sind Distanzhalter 20 angeordnet.

Der Freiraum zwischen dem zylindrischen Hohlraum 13 und den Pfahlsonden 6 kann im Bedarfsfalle mit einer Pfahlfüllung 22 in Form von Metallspänen oder anderem an und für sich bekanntem Material, wie Kies, Sand, Betonit-Zement-Suspension, teilweise oder ganz gefüllt werden.

Ein derartiger Distanzhalter 20 ist in Fig. 3 ersichtlich. Er weist einen Distanzring 24 auf, welcher den Abstand der einzelnen Rohre 21 voneinander festlegt und welcher in verschiedenen Grössen ausgeführt werden kann. Symmetrisch, gegebenenfalls auch asymmetrisch, sind am Umfang des Distanzringes 24 Rohrklammern 25 vorgesehen, in welche die geraden Rohre 21 der Pfahlsonden 6 gehaltert sind. Es ist möglich, diese Distanzhalter einteilig auszuführen oder die Rohrklammern am Distanzring 24 zu befestigen.

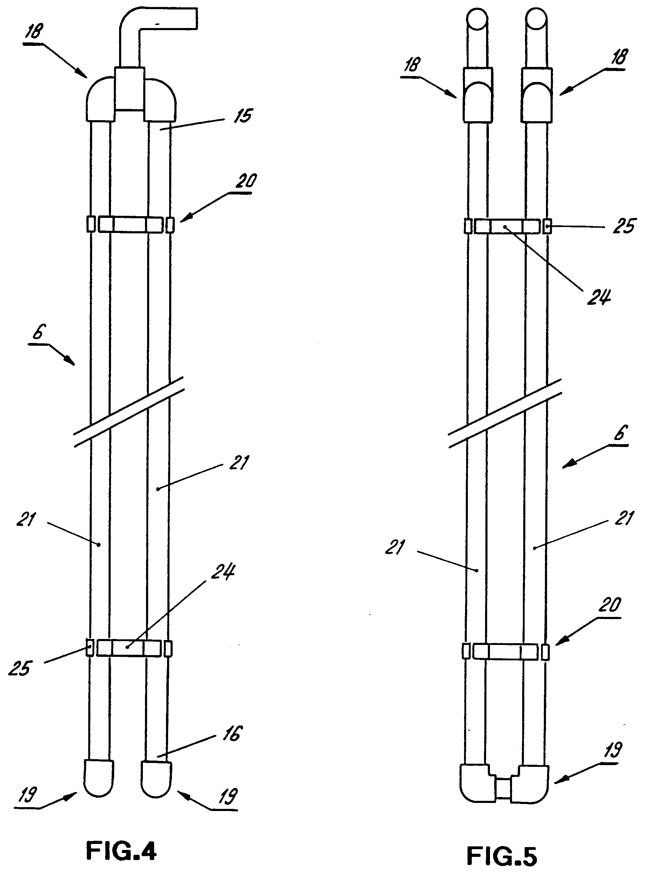

Die Fig. 4 und 5 zeigen zwei parallel geschaltete Pfahlsonden 6, welche mit oberen Verbindungsteilen 18 und unteren Verbindungsteilen 19 miteinander verbunden sind und durch Distanzhalter 20 ein starres Gefüge bilden, welches mühelos in die zylindrischen Hohlräume 13 von Schleuderbetonpfählen 4 eingeschoben werden kann. Diese Pfahlsonden 6 sind insbesondere auch aus preislichen Gründen und wegen möglichen Kontaminationen von Grundwasser und Erdreich aus Kunststoff hergestellt, insbesondere aus Polyaethylen. Die Verbindungen der einzelnen Teile können durch Polyfusionsschweissung oder Vibrationsschweissung erfolgen, während gewisse Teile, die insbesondere leicht zugänglich sein müssen, durch Stumpfschweissung miteinander verbunden sind.

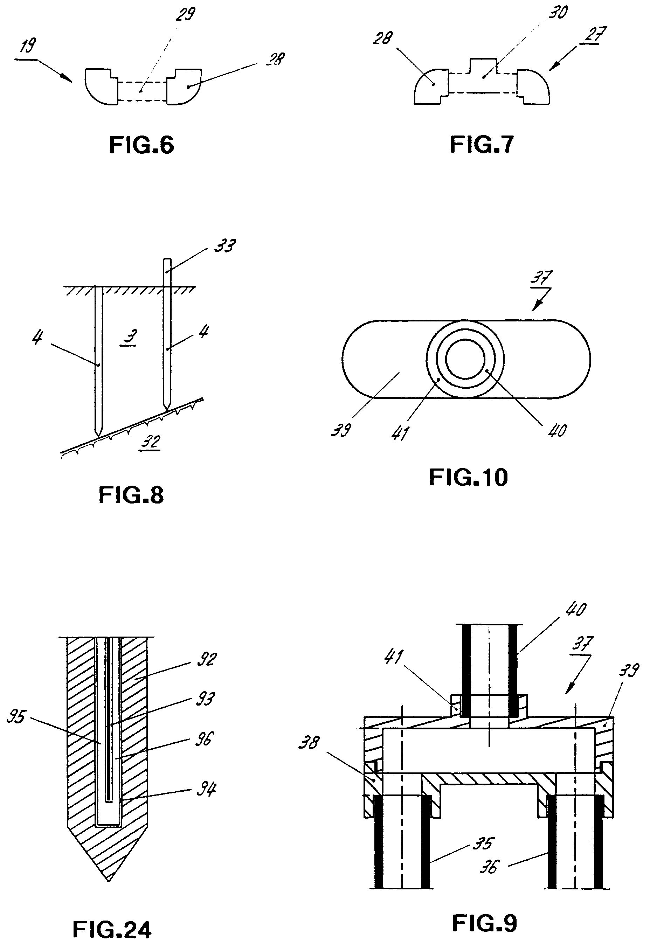

Die Fig. 6 zeigt einen unteren Verbindungsteil 19, welcher aus zwei 90°-Fittingen 28 und einem Verbindungsrohr 29 besteht. Je nach Abstand des als Einheit ausgebildeten Pfahlsondengebildes wird die Länge des Verbindungsrohres 29 unterschiedlich gewählt.

Dasselbe gilt für das T-Stück 30 des Sammlers 27 im oberen Verbindungsteil 18.

Fig. 8 zeigt in schematischer Darstellung, wie in praxi die Lage eingerammter Schleuderbetonpfähle 4 sich präsentieren kann. Der eine der Pfähle 4 ist in vollständiger Länge eingerammt, wobei er mit seiner Spitze eine Felsschicht 32 im Erdreich 3 erreicht. Der Pfahl rechts kann nicht in seiner Gesamtlänge eingerammt werden, da er vorher auf die schräglaufende Felsschicht 32 aufläuft. In diesem Falle wird der herausragende Pfahlteil 33 entfernt und ein entsprechend kürzeres Pfahlsondengebilde mit Pfahlsonden 6 in den Hohlraum des Pfahles 4 eingeführt. Aufgrund der gemäss den Fig. 4 und 5 beschriebenen Konstruktion ist dies ohne weiteres möglich, indem die geraden Rohre 21 der Sonden 6 kürzer gewählt werden.

In der Folge werden einige spezifische Ausführungsmöglichkeiten von Pfahlsondenteilen und deren Zusammenbau erläutert.

Fig. 9 zeigt im Schnitt den Oberteil zweier parallel geschalteter Pfahlsonden, wie dieser grundsätzlich in Fig. 4 ersichtlich ist. Es sind zwei gerade Sondenrohre 35 und 36 je einer Pfahlsonde ersichtlich, welche, wie dies der obere Verbindungsteil 37 erkennen lässt, durch ein Rohrfassungselement 38 miteinander verbunden sind. Auf diesem Rohrfassungselement 38 ist ein Deckel 39 mit einem Vor- bzw. Rücklaufrohr 40 in einem Deckelnippel 41 angeordnet. Während beispielsweise das Rohrfassungselement 38 und der Deckel 39 durch Vibrationsschweissung miteinander flüssigkeitsdicht verbunden sind, sind die beiden Sondenrohre 35 und 36 polyfusionsgeschweisst, ebenso die Schweissung zwischen dem Rohr 40 mit dem Deckel 39. Die Polyfusionsschweissung ähnelt einer Schrumpfschweissung. Die Enden der Rohre 35, 36 und 40, welche zu verschweissen sind, werden aber erhitzt und in diesem Zustand in die dafür vorgesehenen Teile des Rohrfassungselementes 38 und des Deckels 39 eingeschoben.

Die Fig. 10 zeigt eine Aufsicht auf den Deckel 39 der Sonde gemäss Fig. 9.

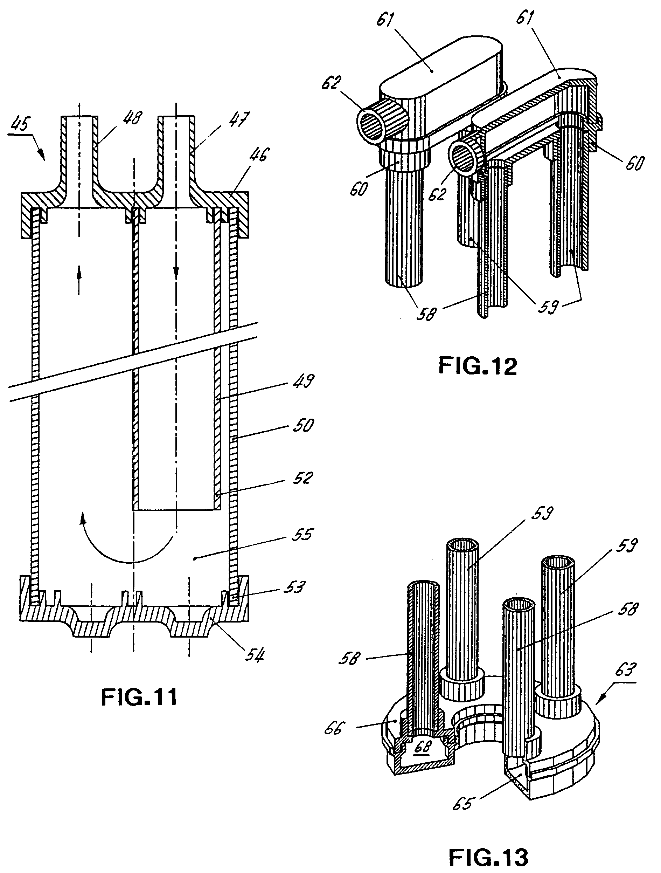

In Fig. 11 ist eine weitere, grundsätzlich andere Ausführung einer Pfahlsonde 45 im Längsschnitt dargestellt. Diese Pfahlsonde 45 weist einen oberen Verbindungsteil 46 auf mit einem Vorlaufanschluss 47 und einem Rücklaufanschluss 48. Ein inneres Sondenrohr 49, welches das Vorlaufwasser in der Sonde führt, ist im Inneren eines äusseren Sondenrohres 50 eingebracht, welches das erwärmte Wasser nach oben leitet. Wie ersichtlich, sind das innere Sondenrohr 49 und das äussere Sondenrohr 50 nicht direkt, sondern indirekt, mittels eines Bodenteiles 54 verbunden. Das Sondenrohrende 52 des inneren Sondenrohres 49 mündet in einen Umkehrraum 55, während, um das Gebilde wasserdicht zu gestalten, das äussere Sondenrohr 50 mit seinem Ende 53 im Bodenteil 54 verschweisst ist. Diese Ausführung benötigt mithin nur drei Schweissungen.

Fig. 12 zeigt in perspektivischer Darstellung und teilweise im Längsschnitt zwei parallel geschaltete Pfahlsonden 58 und 59, von denen je eines ihrer Rohre 58 bzw. 59 mittels eines gemeinsamen Rohrfassungselementes 60 und eines Deckels 61 zu einer Einheit verbunden ist. Der Vorlauf- bzw. Rücklaufstutzen 62 ist bei dieser Ausführung seitlich angeordnet. Im übrigen ist der Aufbau schweisstechnisch gleich wie derjenige gemäss Fig. 9.

Fig. 13 zeigt eine spezielle Konstruktion eines unteren Verbindungsteils in Form eines Bodenteiles 63. Er kann als Bodenteil der Ausführung nach Fig. 12 dienen, indem die Rohre 58 und 59 in entsprechende Stutzen des Bodenteiles 63 mit diesem durch Polyfusionsschweissung verbunden sind. Der Bodenteil 63 besteht aus einem Boden 65 und einem Deckel 66, welche, beispielsweise durch Vibrationsschweissung, miteinander verbunden sind. Sie legen einen hohlzylinderförmigen Umkehrraum 68 fest, in welchen die Rohre 58 und 59 münden. Der Bodenteil 63 mit dem Boden 65 und dem Deckel 66 kann einen durchgehenden Umkehrraum 68 festlegen oder aber diesen so unterteilen, dass zwei Kammern entstehen, von welchen jede einen Zu- und einen Abfluss aufweist. Der gemeinsame Umkehrraum 68 hat den Vorteil, dass, wenn aus irgendeinem Grunde eines der Rohre einen verkleinerten Querschnitt aufweist, trotzdem praktisch die gesamte Flüssigkeitsmenge, unter Zunahme der Durchflussgeschwindigkeit in den freien Rohren weiter zirkuliert.

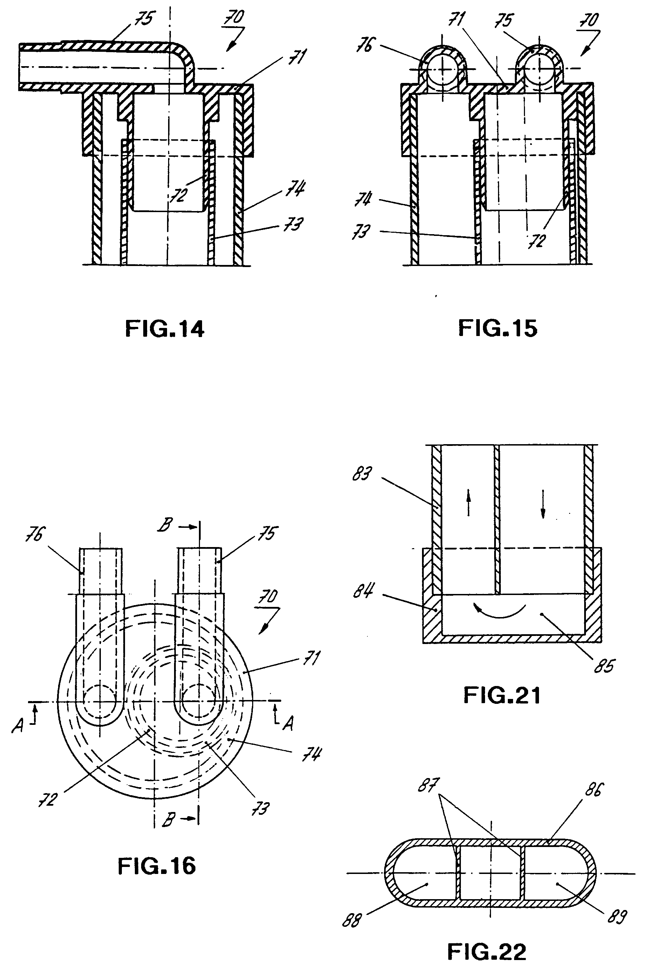

Die Fig. 14 bis 16 zeigen eine weitere Ausführung einer Pfahlsonde 70, wobei Fig. 14 einen Schnitt gemäss Schnittlinie B - B der Fig. 16 darstellt, während Fig. 15 einen Schnitt gemäss Schnittlinie A - A wiedergibt. Die Fig. 14 und 15 zeigen nur das obere Ende der Pfahlsonde 70 mit dem Deckel 71. Die Konstruktion ist im übrigen im Aufbau gleich wie diejenige gemäss Fig. 11. Der Deckel 71 weist einen Innenstutzen 72 auf. Ein inneres Sondenrohr 73 ist auf dem Innenstutzen 72 aufgeschoben und mit diesem, beispielsweise durch Klebung, verbunden. Ein äusseres Sondenrohr 74 umfasst das innere Sondenrohr 73. Der Deckel 71 weist einen Vorlaufstutzen 75 und einen Rücklaufstutzen 76 auf.

Die Fig. 14 bis 16 zeigen eine einfache Pfahlsonde, welche mit einer gleichartigen Konstruktion parallel geschaltet werden kann.

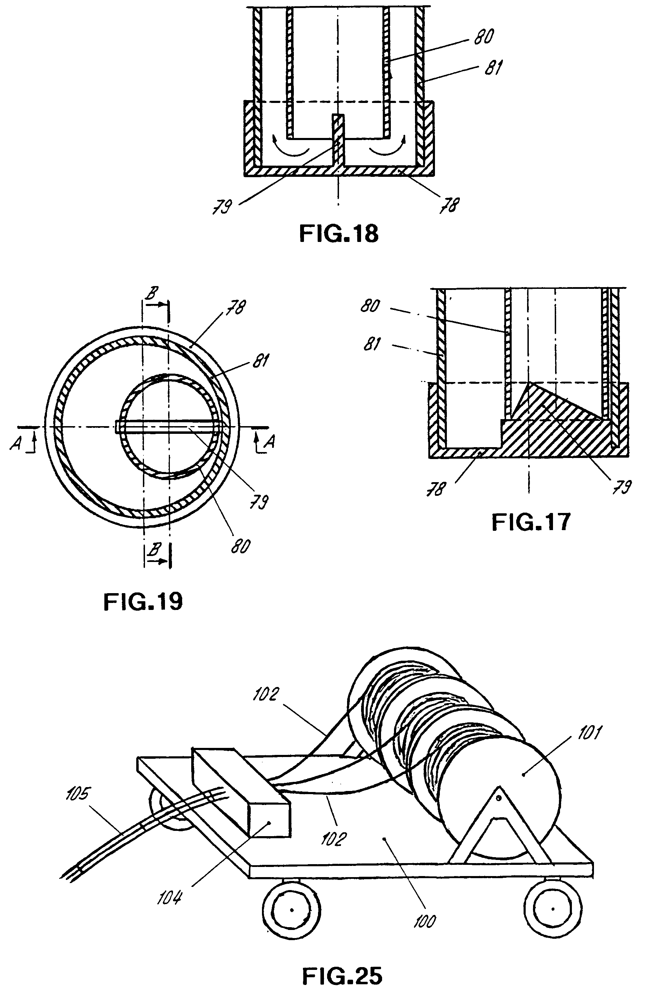

In den Fig. 17 bis 19 sind entsprechende Schnitte des Bodenteils zu einer Sonde, z. B. gemäss den Fig. 14 bis 16, dargestellt. Ein Sondenboden 78 ist mit einer Zentriernase 79 versehen, welche dazu dient, das dem inneren Sondenrohr 73 entsprechende Innenrohr 80 beim Einschieben zu führen und es in seiner Endlage zu fixieren. Wie ersichtlich, stellt die Zentriernase 79 (Fig. 18) gleichzeitig sicher, dass der Durchfluss vom Innenrohr 80 zum Aussenrohr 81 sichergestellt ist.

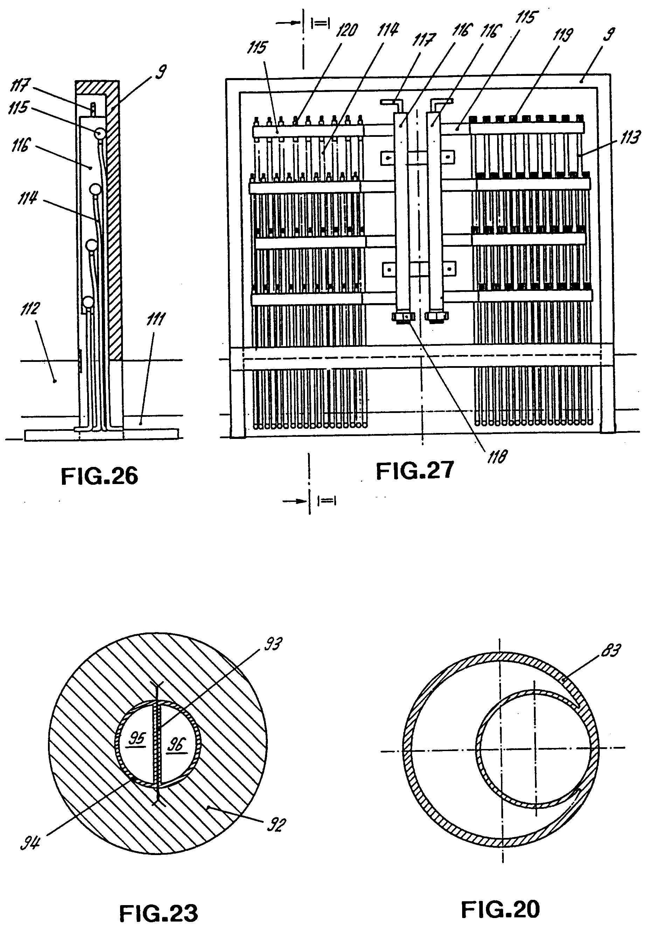

Eine weitere Möglichkeit einer Sondenkonstruktion zeigen die Fig. 20 und 21, in welchen ein in einem Boden 84 befestigtes coextrudiertes Innen-/Aussenrohr 83 ersichtlich ist. Die beiden Durchgänge für Vor- und Rücklauf münden in eine gemeinsame Kammer 85 des Bodens 84. Diese Konstruktion ist einfach im Aufbau und das Innenrohr kann dünnwandig ausgeführt werden, da es praktisch keinen Druckdifferenzen ausgesetzt ist. Die Verschweissung dieses einfachen Doppelrohres 83 mit dem Boden 84 erfolgt beispielsweise durch Polyfusion. Ein zugehöriger Deckel kann beispielsweise in der Art der Ausführung gemäss Fig. 11 ausgeführt sein.

Fig. 22 zeigt die Ausführung eines einteiligen Rohres mit extrudiertem Oval- bzw. Rechteckquerschnitt, so dass ein Rechteckdoppelkanal 86 entsteht, wobei zwei Stütz- und Trennwände 87 den Vorlaufkanal 88 vom Rücklaufkanal 89 trennen.

Die Fig. 23 und 24 zeigen eine völlig neuartige Konstruktion eines Schleuderbetonpfahles mit Pfahlsonde. Der Schleuderbetonpfahl 92 ist mit einer Trennwand 93 und einem Kunststoffspritzbelag 94 versehen. Dabei werden die Durchflusskanäle 95 und 96, welche durch die Trennwand 93 voneinander getrennt sind, gebildet. Im untersten Teil des Schleuderbetonpfahles 92 ist eine Durchflusskammer 97 vorgesehen, in welche die beiden Kanäle 95 und 96 münden.

Der Hohlraum des Schleuderbetonpfahles 92, der beim Schleudern entsteht, wird unterteilt, indem vor dem Schleuderprozess eine entsprechende Trennwand 93 in die Schalung eingebracht wird. Diese Trennwand 93 kann sowohl an der einen Pfahlarmierung, bestehend aus Längsarmierung und Spiralarmierung (nicht dargestellt) als auch an der Schalung selbst befestigt oder abgestützt werden. Beim Schleuderprozess wird der beidseitig der Trennwand 93 eingefüllte Werkstoff nach aussen geschleudert. Im Zentrum entsteht mit der Trennwand 93 ein runder Hohlraumquerschnitt. Die Trennwand 93 teilt den Hohlraumquerschnitt in zwei halbkreisförmige Flächen der Kanäle 95 und 96 auf. Die dadurch entstehenden Hohlräume werden nachträglich mit einer Innenschutzbeschichtung in Form des Kunststoffspritzbelages 94, entsprechend dem Verwendungszweck, versehen.

Fig. 25 zeigt einen Montagewagen 100 mit Rollen 101 zur Aufnahme von Kunststoffleitungen 102. Diese führen zum einen Konfektionierer 104, welcher aus den mindestens zwei Kunststoffleitungen 102 eine Mehrfachsonde 105 herstellt. Mit dem Montagewagen können Sonden mit zwei und mehr Rohren direkt auf der Baustelle angefertigt werden.

Der in den Fig. 26 und 27 dargestellte Verteilerkasten 9 wird auf der Baustelle am definitiven Standort, z.B. im Bereich einer vorgesehenen Wand, montiert und später in eine Magerbetonschicht 111 und eine Fundamentplatte 112 einbetoniert.

Vorerst werden von unten her die Vorlaufleitungen 113 auf der einen Seite sowie die Rücklaufleitungen 114 auf der anderen Seite eingezogen und an den entsprechenden Verteilerbalken 115 angeschlossen. Diese Verteilerbalken 115 sind wiederum mit Verteilern 116 verbunden. Die Verteiler 116 bestehen aus einem rechteckförmigen Stahlprofil mit je einem am oberen Ende angebrachten Füllungs- und Entlüftungsstutzen 117. Diese Füllungs- und Entlüftungsstutzen 117 befinden sich normalerweise am höchsten Punkt des ganzen Systems. Am unteren Ende der Verteiler 116 sind Anschlussstutzen 118 für die Sammelleitungen angebracht.

Mit Hilfe von Durchflussreglern 119 auf der Vorlaufseite und von Durchflussanzeigern 120 auf der Rücklaufseite kann die Menge der Wärmeträgerflüssigkeit jeder einzelnen Sonde mühelos optimal eingestellt werden.

Die Vorteile von kuppelbaren hohlen, rohrförmigen Fundierungselementen, insbesondere von Schleuderbetonpfählen, wie diese vorbeschrieben sind, und welche nach dem Einbringen, d.h. dem Rammen, Pressen usw. in den Baugrund bzw. das Erdreich nachträglich zu Wärmeaustauschern ausgebildet werden, sind unter anderem folgende:
Gerammte Pfähle, insbesondere Schleuderbetonpfähle, können dank ihres inneren Hohlraumes nach dem Rammen kontrolliert werden. Es ist damit möglich, beschädigte oder geknickte Pfähle sofort zu erkennen und sie zu eliminieren.

Auch mit einem noch so gründlichen geotechnischen Gutachten lassen sich nicht für jeden Rammort spezifische schlüssige Pfähllängen ermitteln. Das vorbeschriebene Pfählungssystem erweist sich gerade hier als besonders flexibel. Die genaue Länge der Pfahlsonde wird nach dem Rammen des Pfahles festgelegt, vorkonfektioniert auf die Baustelle geliefert und anschliessend eingebaut. Unterschiedliche Pfahllängen können, wie beispielsweise Fig. 8 zeigt, bei schrägem Felsverlauf benötigt werden. Bei den bisherigen Energiepfahlsystemen wird beim Kürzen eines zu langen Pfahles die einbetonierte Sonde beschädigt, deren Reparatur nicht nur kostspielig ist, sondern bezüglich Funktionsfähigkeit sehr fragwürdig.

Da jeder Pfahl, auch wenn er mit Kupplungen zusammengesetzt ist, über einen durchgehenden Hohlraum auf der gesamten gepfählten Länge verfügt, kann die Entnahme und Speicherung von Wärme somit auf seiner ganzen Länge sichergestellt werden. Damit wird die Wirtschaftlichkeit einer entsprechenden Baute wesentlich positiv beeinflusst. Aber auch bezüglich Umweltfreundlichkeit wird mit diesem umweltschonenden System, wie vorbeschrieben, die Wärme aus dem Erdreich geholt, ohne Schadstoffausstoss, ölunabhängig, kontaminationssicher und kostengünstig. Denn bei den bisherigen Elementen ist normalerweise ein Zusammensetzen von Pfählen bei grossen Tiefen wegen der eingegossenen Sonden oder bei Verwendung gummielastischer Schläuche wegen deren problematischen und unsicherem Einbringen in die langen Hohlräume der zusammengesetzten Pfähle im Sinne der vorliegenden Erfindung nicht möglich. Dieses Problem tritt insbesondere bei Tiefen von über ca. 15m auf.

Das vorbeschriebene System ist äusserst betriebssicher, da jeder Energiepfahl einzeln regulierbar ist. Die Regulierventile mit integrierter Durchflussmessung, wie dies bezüglich der Fig. 26 und 27 beschrieben ist, bieten mit der nötigen Sicherheit die Möglichkeit genauer Anzeige und schneller Einstellung. Dank eingebauter Entlüftungsventile in den Zenitpunkten der Anlage sind keine unkontrollierten Lufteinschlüsse und damit behinderter Durchfluss möglich.

Auch die Montage dieses Systems ist einfach. Der fertige Verteilerkasten wird mit eingebauten Vorlauf- und Rücklaufventilen auf die Baustelle geliefert und ist in jeder Wand integrierbar.

Die vorliegenden Konstruktionen sind optimal gestaltet, indem diese in der Herstellung billig sind, bezüglich Dimensionierungen vielfältig, einfach im Verbinden der Teile, geringe Lagerhaltung, Verwendung von Modulteilen.

Polyfusionsschweissungen verhüten die Gradbildung im Inneren der Schweissstelle und deren Vorstehen in den Durchflussquerschnitt, was zusätzliche Strömungswiderstände erzeugen würde.

Die entsprechende Formausbildung von Deckeln und Boden von Sonden ermöglicht gleiche Spritzwerkzeuge, was sich wesentlich kostensparend auswirkt.

Die vorliegende Erfindung ermöglicht auch eine Erdwärmespeicherung unterhalb eines Grundwasservorkommens, was bisher ein sehr schwer zu bewältigendes Problem darstellte. Mit der vorliegenden Pfahlkonstruktion wird ein einzelner oder zusammengesetzter Pfahl so weit ins Erdreich eingerammt, bis der Pfahl das Grundwasser durchsetzt und in grundwasserfreie Unterschichten eingedrungen ist. Der Pfahl ersetzt dann die Verrohrung beim anschliessenden Bohren durch den Pfahlhohlraum. Beim Bohren wird die Pfahlspitze durchbohrt und anschliessend in das Bohrloch, entweder die Sonden, eingeschoben oder aber ein zusätzliches Schutzrohr durch den Pfahlhohlraum abgesenkt, um die Fortsetzung der Pfahlspitze zu markieren und in seinem Inneren die entsprechenden Sondenelemente aufzunehmen. Es ist auch möglich, den Freiraum zwischen Bohrlochaussenwandung und den eingeführten Sonden unterhalb des Grundwasservorkommens auszuinjizieren. Im Bereich des Grundwasservorkommens kann der Pfahlhohlraum mit einer isolierenden Masse ausgefüllt werden, um einer unerwünschten Erwärmung des Grundwassers zu begegnen.

Oben erfolgt der Anschluss der Sonden an die Verteilleitungen und das Fundament kann betoniert werden.

## Patentansprüche

1. Erdsondengebilde mit mindestens einer im wesentlichen aus Kunststoff bestehenden formsteifen Erdsonde (6) für den Einbau in Hohlräume (13) von Fundierungselementen (4) und Bohrlöchern, gekennzeichnet durch mindestens einen Kopfteil (18), welcher mit mindestens zwei geraden, parallelen Langrohren (21) durch Schweissung oder Klebung flüssigkeitsdicht verbunden ist und durch mindestens einen Bodenteil (19), der mit mindestens einem der geraden Rohre (21) durch Schweissung oder Klebung flüssigkeitsdicht verbunden ist.

2. Erdsondengebilde, vorzugsweise nach mindestens einem der Ansprüche, wie nach Anspruch 1, dadurch gekennzeichnet, dass mehrere Erdsonden (6) parallelgeschaltet sind.

3. Erdsondengebilde, vorzugsweise nach mindestens einem der Ansprüche, wie nach einem der Ansprüche 1 oder 2, dadurch gekennzeichnet, dass sich der Kopfteil (18) und/oder der Bodenteil (19) aus zwei Nippeln (28), vorzugsweise 90°-Nippeln, und einem geraden (29) oder einem T-förmigen Zwischenrohr (30) zusammensetzt.

4. Erdsondengebilde, vorzugsweise nach mindestens einem der Ansprüche, wie nach einem der Ansprüche 1 bis 3, dadurch gekennzeichnet dass der Kopfteil (37) mehrteilig ausgebildet ist und z.B. aus einem Rohrfassungselement (38) zum Fassen von mindestens zwei geraden Rohren (35, 36) und einem Deckel (39) mit mindestens einem Rohranschlussnippel (41) besteht, wobei die Teile (38, 39) des Kopfteils (37) miteinander verschweisst oder verklebt sind.

5. Erdsondengebilde, vorzugsweise nach mindestens einem der Ansprüche, wie nach einem der Ansprüche 1 bis 4, dadurch gekennzeichnet, dass der Kopfteil (46) und/oder der Bodenteil (54) einteilig, insbesondere gespritzt, sind und mindestens eines (49) von parallelen Rohren (49, 50) in einem anderen Rohr (50) angeordnet ist, wobei nur das grössere Rohr (50) sowohl mit dem Kopf- (46) als auch mit dem Bodenteil (54) flüssigkeitsdicht verbunden ist.

6. Erdsondengebilde, vorzugsweise nach mindestens einem der Ansprüche, wie nach einem der Ansprüche 1 bis 5, dadurch gekennzeichnet, dass der Kopfteil (37; 46; 61; 71) mindestens einen parallelachsig oder rechtwinklig zu den Langrohren (35, 36; 49, 50; 58, 59; 73, 74) angeordneten Anschlussnippel (41; 47, 48; 62, 75, 76) aufweist.

7. Erdsondengebilde, vorzugsweise nach mindestens einem der Ansprüche, wie nach einem der Ansprüche 1 bis 6, dadurch gekennzeichnet, dass das grössere Aussenrohr (50) länger ist als das Innenrohr (49) und dadurch ein Umkehrraum (55) für die Flüssigkeit gebildet wird.

8. Erdsondengebilde, vorzugsweise nach mindestens einem der Ansprüche, wie nach einem der Ansprüche 1 bis 7, gekennzeichnet durch einen ringartigen, vorzugsweise aus zwei koaxialen Elementen (65, 66) zusammengesetzten Bodenteil (63) mit einer ringförmigen, z.B. unterteilten, Flüssigkeitskammer (68), wobei vorzugsweise das Deckelelement (66) Anschlussstutzen für die Aufnahme der Enden von Langrohren (58, 59) aufweist.

9. Erdsondengebilde, vorzugsweise nach mindestens einem der Ansprüche, wie nach einem der Ansprüche 1 bis 8, dadurch gekennzeichnet, dass der Bodenteil (78) mindestens ein Zentrierorgan (79) für ein Langrohr (80) aufweist.

10. Erdsondengebilde, vorzugsweise nach mindestens einem der Ansprüche, wie nach einem der Ansprüche 1 bis 9, dadurch gekennzeichnet, dass mindestens zwei Langrohre als coextrudiertes Rohrgebilde, z.B. als Innen-/Aussenrohrgebilde (83) ausgebildet sind. (Fig. 20, 21)

11. Erdsondengebilde, vorzugsweise nach mindestens einem der Ansprüche, wie nach einem der Ansprüche 1 bis 10, dadurch gekennzeichnet, dass die Langrohre (21) mit mindestens einem Distanzhalter (20) versehen sind.

12. Erdsondengebilde, vorzugsweise nach mindestens einem der Ansprüche, wie nach einem der Ansprüche 1 bis 11, dadurch gekennzeichnet, dass ein Langrohr mit mindestens einer Längstrennwand (87) zu Bildung getrennter Flüssigkeitskanäle (88, 89) vorgesehen ist, wobei der Langrohrquerschnitt vorzugsweise oval ausgebildet ist. (Fig. 22)

13. Distanzhalter für Erdsondengebilde mit mehreren parallel geschalteten Langrohren, vorzugsweise nach mindestens einem der Ansprüche, gekennzeichnet durch ein Distanzhalteorgan (24) mit auf dessen Umfang angeordneten Klammern (25) zur Festhaltung der Langrohre.

14. Distanzhalter, vorzugsweise nach mindestens einem der Ansprüche, wie nach Anspruch 13, dadurch gekennzeichnet, dass dieser (20) einteilig ausgebildet ist und die Klammern (25) vorzugsweise symmetrisch angeordnet sind.

15. Mindestens einteiliger Erdpfahl mit Erdsonde, vorzugsweise nach mindestens einem der Ansprüche, dadurch gekennzeichnet, dass die Sonde (94, 95, 96) Festteil des Erdpfahles (92) bildet. (Fig. 23, 24)

16. Mindestens einteiliger Erdpfahl mit Erdsonde, vorzugsweise nach mindestens einem der Ansprüche, wie nach Anspruch 15, dadurch gekennzeichnet, dass die im wesentlichen formsteife, z.B. aus Hartkunststoff bestehende Erdsonde (6) herausziehbar im Erdpfahl (4) angeordnet ist.

17. Erdwärmegewinnungsanlage (1) mit hohlen Betonpfählen (4) und in deren Hohlräumen (13) angeordnete Erdsondengebilde und Flüssigkeitsverteil- und Sammelleitungen (7), vorzugsweise nach mindestens einem der Ansprüche, dadurch gekennzeichnet, dass die Leitungen (7) in einen Verteilerkasten (9) führen.

18. Erdwärmegewinnungsanlage, vorzugsweise nach mindestens einem der Ansprüche, wie nach Anspruch 17, dadurch gekennzeichnet, dass mindestens eine Anzahl der Verteilleitungen (7) im Verteilerkasten (9) mit Durchflussreglern (119) und/oder Durchflussanzeigern (120) ausgerüstet ist.

19. Verfahren zum Herstellen einer Erdwärmegewinnungsanlage (1) mit mindestens einem hohlen Betonpfahl (4) zum Stützen einer Baute (5), vorzugsweise nach mindestens einem der Ansprüche, dadurch gekennzeichnet, dass man den ein- oder mehrteiligen Betonpfahl (4) ins Erdreich (3) rammt und ihn längenmässig so behandelt, bis er im wesentlichen die gewünschte Ueberbodenlänge aufweist. (Fig. 8)

20. Verfahren, vorzugsweise nach mindestens einem der Ansprüche, wie nach Anspruch 19, dadurch gekennzeichnet, dass man für Pfählungstiefen, die kleiner sind als die Pfahllänge, den zu langen Kopfteil kürzt. (Fig. 8)

21. Verfahren, vorzugsweise nach mindestens einem der Ansprüche, wie nach einem der Ansprüche 19 oder 20, dadurch gekennzeichnet, dass man in den zur Lastaufnahme bereiten Betonpfahl (4) das Erdsondengebilde (6) einschiebt.

22. Verfahren, vorzugsweise nach mindestens einem der Ansprüche, wie nach einem der Ansprüche 19 bis 21, dadurch gekennzeichnet, dass man bei Erdreich mit Grundwasser den Pfahl bis in den Grundwasserbodenrand und anschliessend die Pfahlspitze vom Pfahlhohlraum aus durchbohrt, um weiter in das Erdreich einzudringen, und dass man dann das Erdsondengebilde vorzugsweise bis in den Bereich des Bohrlochendes, durch den Pfahl hindurch einführt und gegebenenfalls im Bereich des Bohrloches eine Masse injiziert.

23. Verfahren, vorzugsweise nach mindestens einem der Ansprüche, wie nach einem der Ansprüche 19 bis 22, dadurch gekennzeichnet, dass man den Hohlraum mit einem Wärmeleitmaterial verfüllt und im Bereich des Pfahles bzw. im Bereich der grundwasserführenden Schicht den Hohlraum mit einem wärmeisolierenden Material, (z.B. einer Isolationsschäumung), verfüllt, um einer unerwünschten Erwärmung des Grundwassers zu begegnen.
